# EUROPÄISCHE PATENTSCHRIFT

(11) **EP 3 286 446 B1**
(45) Veröffentlichungstag und Bekanntmachung des Hinweises auf die Patenterteilung: **02.01.2019**
(21) Anmeldenummer: 16723643.9
(22) Anmeldetag: 13.04.2016
(51) Int. Cl.: F16D 13/75, F16D 23/12, F16D 65/18, F16D 65/56

(54) **KUPPLUNGSEINRICHTUNG**
CLUTCH DEVICE
SYSTÈME D'EMBRAYAGE

(30) Priorität: 21.04.2015 DE 102015207184
(43) Veröffentlichungstag der Anmeldung: 28.02.2018
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2016/200181
(87) Internationale Veröffentlichungsnummer: WO 2016/169561

(56) Entgegenhaltungen:
- WO-A1-2008/058508
- DE-A1-102010 006 055

## Beschreibung

Die Erfindung betrifft eine Kupplungseinrichtung mit einer in nicht betätigtem Zustand geöffneten und von einem Aktor mittels einer Hebelfeder entlang eines Einrückweges zugedrückten Reibungskupplung, wobei der Aktor mittels eines Einrücklagers radial innen liegende Hebelspitzen der Hebelfeder axial verlagert, die Hebelfeder an einer Rampeneinrichtung einer selbsttätig kraftgesteuerten Nachstelleinrichtung gegenüber einem Kupplungsdeckel abgestützt ist und radial außen die Anpressplatte gegenüber einer axial festen Gegendruckplatte verlagert, wobei eine Sensorfeder mit einer Kraftwirkung zwischen dem Kupplungsdeckel und der Hebelfeder eingespannt ist, wobei die Hebelfeder zumindest vor einer Übertragung eines Kupplungsmoments einen degressiven Kennlinienverlauf aufweist und eine Kontaktkraft der Hebelfeder bei Verschleiß zwischen Hebelfeder und der Rampeneinrichtung abhängig von einer sich verschleißabhängig ändernden Einbaulage der Hebelfeder so weit absinkt, dass sich ein Verstellring der Rampeneinrichtung unter axialem Ausgleich des Verschleißes verdrehen kann.

Gattungsgemäße Kupplungseinrichtungen bilden beispielsweise Doppelkupplungen, wie sie beispielsweise in Doppelkupplungsgetrieben von Kraftfahrzeugantriebssträngen eingesetzt werden. Beispielsweise ist aus der WO2008/058508 A1 oder der DE 10 2010 006 055 A1 eine Doppelkupplung bekannt, in der zwei zugedrückte, das heißt, im nicht betätigten Zustand offene Reibungskupplung mit jeweils einer gegen eine gemeinsame Gegendruckplatte von einem Aktor vorspannbaren Anpressplatte. Dabei wird die der Antriebsseite zugewandte Reibungskupplung radial außen über einen die Gegendruckplatte übergreifenden Zuganker von der Getriebeseite aus betätigt, indem eine Hebelfeder radial außen den Zuganker betätigt und radial innenliegende Hebelspitzen der Hebelfeder von einem Aktor entlang eines Einrückweges unter Zwischenschaltung eines Einrücklagers in Richtung Antriebsseite verlagert werden. Hierbei stützt sich die Hebelfeder radial zwischen den Hebelspitzen und dem Zuganker an dem axial fest mit der Gegendruckplatte verbundenen Kupplungsdeckel ab und bildet dadurch einen zweiarmigen Hebel. Um eine selbstnachstellende kraftgesteuerte Nachstelleinrichtung bereitzustellen, ist zwischen dem Kupplungsdeckel und der Hebelfeder eine Rampeneinrichtung vorgesehen, die bei Verdrehung eines in Umfangsrichtung vorgespannten Verstellrings den axialen Verschleiß der zwischen der Gegendruckplatte und der Anpressplatte einspannbaren Reibbeläge einer Kupplungsscheibe kompensiert. Hierzu ist eine Sensorfeder zwischen der Hebelfeder und dem Kupplungsdeckel vorgespannt und die Hebelfeder weist bei geöffneter Reibungskupplung einen degressiven Kennlinienverlauf auf. Dies führt dazu, dass sich bei Verschleiß der Reibbeläge die Einbaulage der Hebelfeder in Richtung der degressiv abnehmenden Vorspannung der Hebelfeder gegenüber der Rampeneinrichtung ändert. Hierbei gewinnt die gegen die Vorspannkraft wirksam geschaltete Sensorfeder an Einfluss, so dass sich bei einem vorgegebenen Verschleiß der Verstellring verdrehen kann, bis ein axialer Ausgleich für den Verschleiß und damit die Kräfteverhältnisse der ursprünglichen Einbaulage der Hebelfeder wieder hergestellt sind.

Desweiteren sind aus der DE 10 2004 009 832 A1 Aktoren zur Betätigung einer Reibungskupplung, insbesondere Hebelaktoren bekannt, die kraftgeregelt sind und teilweise eine über den Betätigungsweg stetig ansteigende Kraftkennlinie benötigen. Aufgabe der Erfindung ist die Weiterbildung einer gattungsbildenden Kupplungseinrichtung, die mit einer möglichst hohen Anzahl von mit unterschiedlichen Betriebskonzepten betriebenen Aktoren kompatibel ist. Insbesondere ist Aufgabe der Erfindung eine gattungsgemäße Kupplungseinrichtung vorzuschlagen, welche von einem Hebelaktor betrieben wird.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Die vorgeschlagene Kupplungseinrichtung betrifft beispielsweise eine Doppelkupplung mit einer in nicht betätigtem Zustand geöffneten und von einem Aktor mittels einer Hebelfeder entlang eines Einrückweges zugedrückten Reibungskupplung. Die Reibungskupplung ist insbesondere eine einer Antriebsseite, beispielsweise einem Verbrennungsmotor zugewandte Reibungskupplung, welche mittels eines Zugankers betätigt wird und eine einen zweiarmigen Hebel ausbildende Hebelfeder aufweist, die radial außen den Zuganker betätigt und deren radial innen angeordnete Hebelspitzen vom Aktor unter Zwischenschaltung eines Einrücklagers axial in Richtung des Verbrennungsmotors unter Betätigung der Reibungskupplung verlagert werden. Die Hebelfeder ist dabei an einer Rampeneinrichtung einer selbsttätig kraftgesteuerten Nachstelleinrichtung gegenüber einem mit der Gegendruckplatte verbundenen Kupplungsdeckel abgestützt und verlagert radial außen die Anpressplatte gegenüber einer axial festen Gegendruckplatte. Zur Erfassung des Verschleißes ist zwischen Kupplungsdeckel und Hebelfeder eine Sensorfeder mit einer Kraftwirkung zwischen dem Kupplungsdeckel und der Hebelfeder eingespannt, wobei die Hebelfeder zumindest vor einer Übertragung eines Kupplungsmoments einen degressiven Kennlinienverlauf aufweist und eine Kontaktkraft der Hebelfeder bei Verschleiß zwischen Hebelfeder und der Rampeneinrichtung abhängig von einer sich verschleißabhängig ändernden Einbaulage der Hebelfeder so weit absinkt, dass sich ein Verstellring der Rampeneinrichtung unter axialem Ausgleich des Verschleißes verdrehen und den Verschleiß der Reibbeläge zumindest teilweise ausgleichen kann.

Um die vorgeschlagene Reibungskupplung universell, insbesondere für Aktoren einsetzbar auszubilden, die beispielsweise aufgrund ihrer internen Regelung eine eindeutige Zuordnung einer Einrückkraft zu einem Einrückweg, das heißt beispielsweise eine stetig über den Einrückweg ansteigende Einrückkraft benötigen, ist zwischen der Hebelfeder und einem axial festen Bauteil zumindest ein die Einrückkraft des Aktors über den Einrückweg stetig steigend abbildender Energiespeicher eingespannt. Hierdurch steigt zwar die Einrückkraft der Reibungskupplung stetig über den Einrückweg an, der Kennlinienverlauf der Hebelfeder kann jedoch in einem Bereich vor einer Momentenübertragung der Reibungskupplung degressiv ausgebildet sein, um die vorgeschlagene Nachstelleinrichtung auszubilden. Auf diese Weise kann die Kupplungseinrichtung Aktoren enthalten, die aufgrund ihres Arbeitsprinzips kostengünstig ausgebildet und/oder mit einer einfachen Steuerung versehen sein können. Insbesondere kann der Aktor als kraftgeregelter, eine über den Einrückweg stetig ansteigende Einrückkraft erfordernder Hebelaktor ausgebildet sein. Unter einem Hebelaktor ist dabei ein elektromechanisches Kupplungsbetätigungssystem zu verstehen, dessen Elektromotor die Kupplungsstellung nicht direkt beeinflusst, sondern durch die Veränderung des Kräftegleichgewichts zwischen der Reibungskupplung und einem Energiespeicher, beispielsweise Druckfedern des Kupplungsbetätigungssystems, die Reibungskupplung betätigt. Die Einrückkraft der Reibungskupplung und der Gegenkraft dieser Druckfedern stehen immer im Kraftgleichgewicht. Bei welchem Einrückkraftniveau sich das Kraftgleichgewicht einstellt, hängt von dem Übersetzungsverhältnis zwischen Reibungskupplung und Druckfeder ab, das vom Elektromotor des Kupplungsbetätigungssystems verändert werden kann. Da dieses Prinzip immer auf dieses Kraftgleichgewicht angewiesen ist und die Lage des Kraftgleichgewichts immer eindeutig vorhersagbar und reproduzierbar sein muss, muss die Kupplungseinrückkraftkennlinie einen permanent ansteigenden Verlauf aufweisen, der an der vorgeschlagenen Reibungskupplung durch die zusätzliche Beschaltung der Hebelfeder mit dem vorgeschlagenen Energiespeicher ermöglicht wird, ohne den degressiven Kennlinienverlauf der Hebelfeder zur Bereitstellung der Nachstelleinrichtung zu behindern.

Die wirksame Anordnung des zumindest einen Energiespeichers kann außerhalb der Reibungskupplung erfolgen, indem dessen axiale Verspannung zwischen dem drehfesten, dem Aktor zugeordneten Lagerring des Einrücklagers und einem drehfesten Bauteil, beispielsweise einem Getriebegehäuse oder einem mit diesem verbundenen Bauteil vorgesehen ist. Unter wirksamer Anordnung ist hierbei jeder Ort zwischen einem axial festen und einem durch den Aktor axial verlagerten Bauteil zu verstehen. Alternativ oder zusätzlich kann eine wirksame Anordnung des zumindest einen Energiespeichers im Kraftfluss zwischen dem mit der Reibungskupplung drehenden Lagerring des Einrücklagers und einem axial festen Bauteil der Reibungskupplung vorgesehen sein. Hierzu kann eine axiale Einspannung beispielsweise zwischen der Gegendruckplatte, dem mit dieser verbundenen Kupplungsdeckel und dergleichen einerseits und dem Lagerring und der Hebelfeder insbesondere radial innerhalb der Rampeneinrichtung andererseits vorgesehen sein.

Hierzu kann gemäß einer vorteilhaften Ausführungsform der zumindest eine Energiespeicher außerhalb eines Kraftflusses zwischen der Hebelfeder und der Anpressplatte zwischen dem Kupplungsdeckel und der Hebelfeder axial verspannt sein. Beispielsweise kann der zumindest eine Energiespeicher sich an einer mit dem Kupplungsdeckel fest verbundenen Haltescheibe und zwischen dem drehenden Lagerring und den Hebelspitzen abstützen. Beispielsweise können an dem Kupplungsdeckel die die Hebelfeder durchgreifenden, über den Umfang verteilt angeordnete Abstandsbolzen befestigt sein, die die Haltescheibe aufnehmen. Auf diese Weise ist eine Anbringung des zumindest einen Energiespeichers außerhalb der Reibungskupplung möglich, so dass das innere Design der Reibungskupplung abgesehen von den Befestigungsöffnungen wie Nietlöchern im Kupplungsdeckel ohne Änderungen verwendet werden kann.

Zur Abstützung des zumindest einen Energiespeichers an der Hebelfeder beziehungsweise an dem drehenden Lagerring kann zwischen dem Lagerring und den Hebelspitzen eine Abstützscheibe, beispielsweise eine im Querschnitt Z-förmige Abstützscheibe vorgesehen sein, an der sich der zumindest eine Energiespeicher radial außerhalb des Teilkreises der Anlageflächen der Hebelspitzen an dem Lagerring abstützt. Um den zumindest einen Energiespeicher in seiner Wirkung zu unterstützen, kann die Haltescheibe und/oder Abstützscheibe in ihrer axialen Steifigkeit eingestellt sein, beispielsweise axial elastisch ausgebildet sein.

In einer alternativen Ausführungsform kann der zumindest eine Energiespeicher direkt zwischen der Hebelfeder und dem Kupplungsdeckel angeordnet und an diesem axial abgestützt sein. Der zumindest eine Energiespeicher kann auch aus mehreren Bauteilen, insbesondere mehreren elastischen Bauteilen mit unterschiedlicher oder gleicher Federkennlinie zusammengesetzt ausgebildet sein.

Gemäß einer vorteilhaften Ausführungsform kann der zumindest eine Energiespeicher auf demselben Radius wie die Hebelspitzen axial gegen die Hebelfeder abgestützt sein. Beispielsweise kann der Energiespeicher als Tellerfeder mit Federspitzen ausgebildet sein, die auf den Hebelspitzen der Hebelfedern liegen oder zwischen den Hebelspitzen angeordnet sind und sich beispielsweise über den Umfang mit den Hebelspitzen abwechseln.

Mit anderen Worten soll eine Reibungskupplung mit dem zumindest einen Energiespeicher, beispielsweise mit einer Kompensationsfeder ausgestattet werden, die direkt auf das Einrücklager der Reibungskupplung wirkt, oder auf sehr kleinem Durchmesser radial innen auf deren Hebelspitzen wirkt. Dadurch ist es möglich, die kupplungsinternen Kräfte nicht oder nur im vernachlässigbaren Maße zu verändern, so dass die kraftgesteuerte Verschleißnachstellung weiterhin funktioniert und gleichzeitig für das Kupplungsbetätigungssystem wie Aktor eine konstant ansteigende Einrückkraftcharakteristik erzeugt wird. Die Kompensationsfeder weist dazu in dem Bereich, in dem die ursprüngliche Kupplungskennlinie degressiv ist (negative Steigung), einen so starken Kraftanstieg (positive Steigung) auf, dass die Summe beider Kräfte einen ansteigenden Verlauf zeigt. In den anderen Bereichen des Einrückwegs, in denen die ursprüngliche Kupplungskennlinie einen positiven Verlauf zeigt, ist der Einfluss der Kompensationsfeder nicht erforderlich. Die Kennlinie der Kompensationsfeder kann dort einen Kraftanstieg aufweisen oder durch degressive Kennlinienbereiche einen Kraftabfall aufweisen, solange dieser nicht so extrem ausfällt, dass die Summenkennlinie ihre positive Steigung verliert. Es ist insbesondere sinnvoll, die Kompensationsfederkraft bei komplett geschlossener Kupplung möglichst gering zu halten, um die Kräfte, die dem Momentenaufbau entgegenwirken, nicht im unnötigen Maße zu erhöhen.

Die vorgeschlagene Kupplungseinrichtung kann aus einem Doppelkupplungssystem gebildet sein, welches eingangsseitig einen Drehschwingungsdämpfer, beispielsweise ein Zweimassenschwungrad, eine Doppelkupplung mit kraftgesteuerter Verschleißnachstellung und ein Einrücksystem, beispielsweise einen Aktor wie Hebelaktor enthält. Hierbei kann insbesondere bei der dem Antrieb zugewandten Reibungskupplung die Kompensationsfeder auf der dem Getriebe zugewandten Seite der Hebelfeder angeordnet sein. Dazu wird die Kompensationsfeder auf mindestens einem mit dem Kupplungsdeckel verbundenen Träger wie Haltescheibe abgestützt und zentriert. Der radial innere Bereich, der beispielsweise als Tellerfeder ausgestalteten Kompensationsfeder, überträgt seine in Öffnungsrichtung der Kupplung wirkende Axialkraft auf das Einrücklager. Dabei kann die Kompensationsfeder über ein Zwischenelement, beispielsweise eine Z-Scheibe mit dem Einrücklager verbunden sein. Die Federzungen der Kompensationsfeder können aber auch radial und/oder in Umfangsrichtung versetzt auf derselben Kontaktfläche des Einrücklagers aufliegen wie die Zungen der Hebelfeder. Besonders interessant ist es dabei, die Zungen von Hebel- und Kompensationsfeder ineinandergreifen zu lassen, so dass auf dem Umfang des Einrücklagers abwechselnd die Zungen der beiden Federn aufliegen. Die Zungen der beiden Federn können auch axial übereinander liegen, oder die Zungen der Kompensationsfeder werden bajonettähnlich hinter den Zungen der Hebelfeder eingehakt.

Es ist besonders vorteilhaft, die Kompensationsfeder als Tellerfeder mit einem ausgeprägten Maximum auszuführen und so einzubauen, dass ihr Betriebsbereich vor deren Maximum beginnt und erst nach dem Maximum endet. Dadurch kann ein stark ansteigender Kennlinienbereich vor dem Maximum erzielt werden, der den degressiven Bereich der ursprünglichen Kraftkennlinie der Hebelfeder sowie der anderen am Kräftegleichgewicht beteiligten Kräfte wie beispielsweise der Belagfederung und der die Anpressplatte mit der Gegendruckplatte drehfest und axial verlagerbar verbindenden Blattfedern kompensiert. Durch den Kraftabfall hinter dem Maximum lassen sich die Verlustkräfte reduzieren, die die Kompensationsfeder bei stark geschlossener Reibungskupplung, bei der keine Kompensation mehr erforderlich ist, auf das Einrücksystem ausübt.

Wird der Träger, auf dem sich die Kompensationsfeder abstützt, als elastische Auflage ausgeführt, geht dessen Elastizität in die Kompensationskraftkennlinie mit ein. Die Elastizität der Auflage führt bei gleicher Tellerfedercharakteristik der Kompensationsfeder zu einem flacheren Kraftanstieg vor dem Kraftmaximum und zu einem schnelleren Kraftabfall danach. Dies kann die Kompensationswirkung der Kompensationsfeder verbessern.

Wird die Kompensationsfeder auf beiden Seiten so mit ihren Nachbarbauteilen verbunden, dass sie Kräfte in beide Axialrichtungen übertragen kann, kann die Kompensationsfeder in ihrem degressiven Bereich eine Schnappfedercharakteristik aufweisen, so dass sich ihre Kraftrichtung bei mit hoher Einrückkraft geschlossener Reibungskupplung umkehrt. Mit dieser Kompensationsfeder mit Schnappfedercharakteristik lässt sich nicht nur nach außen hin eine permanent ansteigende Einrückkraftkennlinie der Reibungskupplung erzeugen, sondern es kann auch die maximal benötigte Einrückkraft zum Übertragen des Kupplungsmoments reduziert werden.

In einem weiteren, zu diesem alternativen Doppelkupplungssystem kann die Kompensationsfeder axial zwischen dem Kupplungsdeckel und der Hebelfeder angeordnet sein.

Die Erfindung wird anhand des in den Figuren 1 bis 3 dargestellten Ausführungsbeispiels näher erläutert. Dabei zeigen:
- Figur 1: den oberen Teil einer um eine Drehachse angeordneten Kupplungseinrichtung im Schnitt,
- Figur 2: eine gegenüber der Kupplungseinrichtung der Figur 1 abgeänderte Kupplungseinrichtung in derselben Darstellung
und
- Figur 3: ein Diagramm mit Kraft- und Momentenkennlinien der Kupplungseinrichtungen der Figuren 1 und 2 über den Einrückweg.

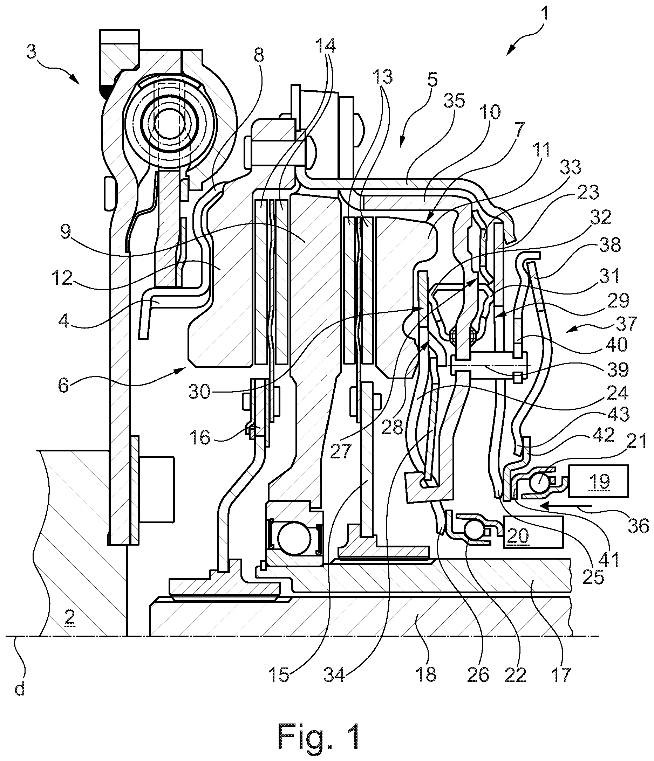

Die Figur 1 zeigt den oberen Teil der um die Drehachse d angeordneten Kupplungseinrichtung 1 im Teilschnitt. An ihrem Eingangsteil weist die Kupplungseinrichtung 1 den mit der Kurbelwelle 2 eines Verbrennungsmotors verbundenen Drehschwingungsdämpfer 3 auf, der mittels der Steckverbindung 4 mit der die beiden Reibungskupplungen 6, 7 enthaltenden Doppelkupplung 5 drehfest verbunden ist. Hierbei ist das Antriebsblech 8 drehfest mit der gemeinsamen Gegendruckplatte 9 verbunden, an der der Kupplungsdeckel 10 drehfest befestigt ist. Mit der Gegendruckplatte 9 ist jeweils an jeder Seite mittels nicht dargestellter Blattfedern eine Anpressplatte 11, 12 drehfest und axial verlagerbar verbunden. Zwischen den Anpressplatten 11, 12 und der Gegenruckplatte 9 sind jeweils Reibbeläge 13, 14 von Kupplungsscheiben 15, 16 verspannbar angeordnet. Die Kupplungsscheiben 15, 16 sind jeweils mit einer Getriebeeingangswelle 17, 18 eines Doppelkupplungsgetriebes verbunden. Die Gegendruckplatte 9 ist auf der Getriebeeingangswelle 17 verdrehbar und axial fest gelagert.

Die Anpressplatten 11, 12 der zwangsweise geschlossenen wie zugedrückten Reibungskupplungen 6, 7 werden jeweils mittels der lediglich schematisch dargestellten Aktoren 19, 20 betätigt. Diese verlagern mittels Einrücklagern 21, 22 die Hebelspitzen 25, 26 der Hebelfedern 23, 24 in Richtung Antriebsseite wie Kurbelwelle 2 parallel zu der Drehachse d, um die Reibungskupplungen 6, 7 einzurücken und ein Kupplungsmoment über einen sich bildenden Reibschluss mit den Reibbelägen 13, 14 von der Kurbelwelle 2 auf die Getriebeeingangswellen 17, 18 zu übertragen.

Die Reibungskupplungen 6, 7 weisen jeweils eine Nachstelleinrichtung 27, 28 zur Kompensation des Verschleißes der Reibbeläge 13, 14 auf. Hierbei stellen die zwischen den Hebelfedern 23, 24 angeordneten Rampeneinrichtungen 29, 30 abhängig von den Sensorfedern 33, 34 durch Verdrehen eines in Umfangsrichtung vorgespannten Verstellrings 31, 32 mit in Umfangsrichtung verteilten und ansteigenden Rampen einen axialen Verschleiß der Reibbeläge 13, 14 kraftgeregelt nach. Hierzu ist beispielsweise in der Reibungskupplung 6 die Hebelfeder 23 mit einer degressiven Kennlinie versehen, die vor dem Schließen der Reibungskupplung mit zunehmendem Einrückweg einen abfallenden Kraftverlauf aufweist. Desweiteren ist zwischen den Hebelfeder 23 und dem Kupplungsdeckel 10 die Sensorfeder 33 axial vorgespannt. Bei Betätigung der Reibungskupplung 6 durch Verlagern der Hebelspitzen 25 der Hebelfeder 23 mittels des Aktors 19 stützt sich die Hebelfeder 23 an der Rampeneinrichtung 29 ab und verlagert radial außen die Anpressplatte 12 über den Zuganker 35 in Richtung Gegendruckplatte 9. Dabei überwiegt in der Einbaulage der Hebelfeder 23 in einem Betriebszustand ohne Verschleiß vor der Ausbildung des Reibschlusses die axiale Vorspannkraft der Hebelfeder 23 gegenüber der Rampeneinrichtung 29, um eine Verdrehung des Verstellrings 31 zu verhindern. Nimmt diese Vorspannkraft ab, weil infolge Verschleißes die sich dabei ändernde Einbaulage der Hebelfeder 23 entlang des degressiven Kennlinienverlaufs kleinere Vorspannkräfte bedingt, entlastet die Vorspannung der Sensorfeder 33 die Rampeneinrichtung 29 gegenüber der Hebelfeder 23, so dass sich der Verstellring 31 unter Ausgleich des Verschleißes verdreht, bis sich das alte Kräfteverhältnis ohne Verschleiß wieder eingestellt hat.

Insoweit ist eine degressive Kennlinie der Hebelfeder 23 in der Reibungskupplung 6 vor der Ausbildung eines Reibmoments zur Bereitstellung der Nachstellfunktion notwendig. Um für den Aktor 19, der beispielsweise als Hebelaktor ausgebildet ist und eine mit dem Einrückweg in Richtung des Pfeils 36 stetig ansteigende Einrückkraft benötigt, eine derartige Einrückkennlinie bereitzustellen, ist zwischen dem Einrücklager 21 und einem axial festen Bauteil zumindest ein die Einrückkraft des Aktors 19 über den Einrückweg stetig steigend abbildender Energiespeicher 37 eingespannt. In dem gezeigten Ausführungsbeispiel ist das axial feste Bauteil der Kupplungsdeckel 10, der axial fest mit der Gegendruckplatte 9 verbunden ist. Die Gegendruckplatte 9 ist axial fest mit der Getriebeeingangswelle 17 und damit mit dem Getriebegehäuse und dem Antriebsstrang allgemein verbunden, mit dem wiederum der Aktor 19 verbunden ist, so dass im daraus folgenden Kraftschluss der Energiespeicher 37 axial wirksam zwischen dem axial bewegten Teil und dem axial festen Teil des Aktors 19 wirksam verspannt ist und damit parallel zu der Einrückkraft des Aktors 19 geschaltet ist. Dementsprechend betätigt der Aktor 19 die Hebelfeder 23 mit ihrer anfangs degressiven Kennlinie und den Energiespeicher 37, der als Kompensationsfeder 38 dieses degressive Verhalten ausgleicht, so dass die von dem Aktor 19 über den Einrückweg aufzubringende Kraft mit diesem stetig ansteigt.

In dem gezeigten Ausführungsbeispiel ist die Kompensationsfeder 38 an dem Kupplungsdeckel 10 mittels der Abstandsbolzen 39 aufgenommen, die über den Umfang verteilt mit dem Kupplungsdeckel 10 vernietet sind. Die Abstandsbolzen durchgreifen entsprechende Öffnungen der Hebelfeder 23 und nehmen auf der gegenüberliegenden Seite der Hebelfeder 23 die Haltescheibe 40 auf, an der die Kompensationsfeder 38 zentriert aufgenommen ist und sich radial außen axial abstützt. Die Haltescheibe 40 kann ebenfalls axial elastisch ausgebildet sein. Radial innen stützt sich die Abstützscheibe 42 an dem Einrücklager 21 ab. Hierzu ist zwischen dem Lagerring 41 und den Hebelspitzen 25 die im Querschnitt Z-förmige Abstützscheibe 42 vorgesehen. Alternativ können die Federzungen 43 der Kompensationsfeder 38 radial nach innen erweitert sein und auf den Hebelspitzen 25 aufgelegt oder zwischen diesen angeordnet sein. Durch die Abstützung der Kompensationsfeder 38 an oder in unmittelbarer Nähe der Hebelspitzen 25, kann die Kompensationsfederkennlinie besonders gut abgestimmt werden, da infolge der Verschleißnachstellung über die gesamte Lebensdauer der Reibungskupplung 6 dasselbe Bewegungsverhalten des Einrücklagers 21 erhalten bleibt.

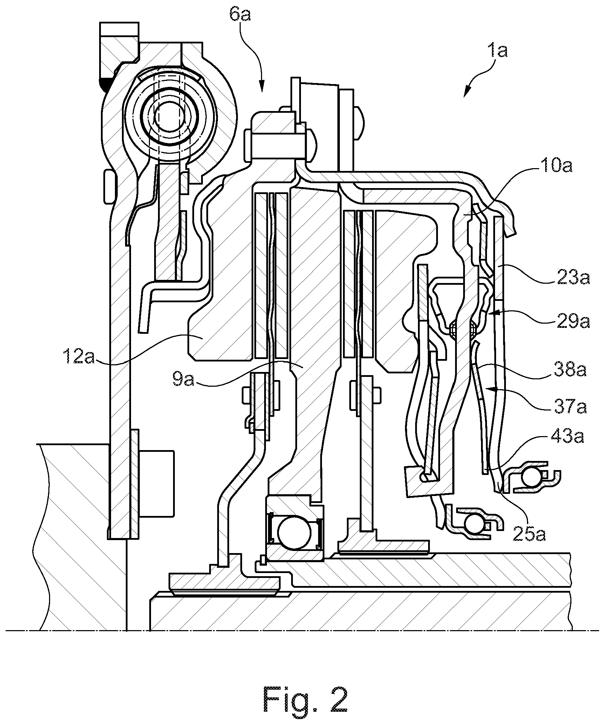

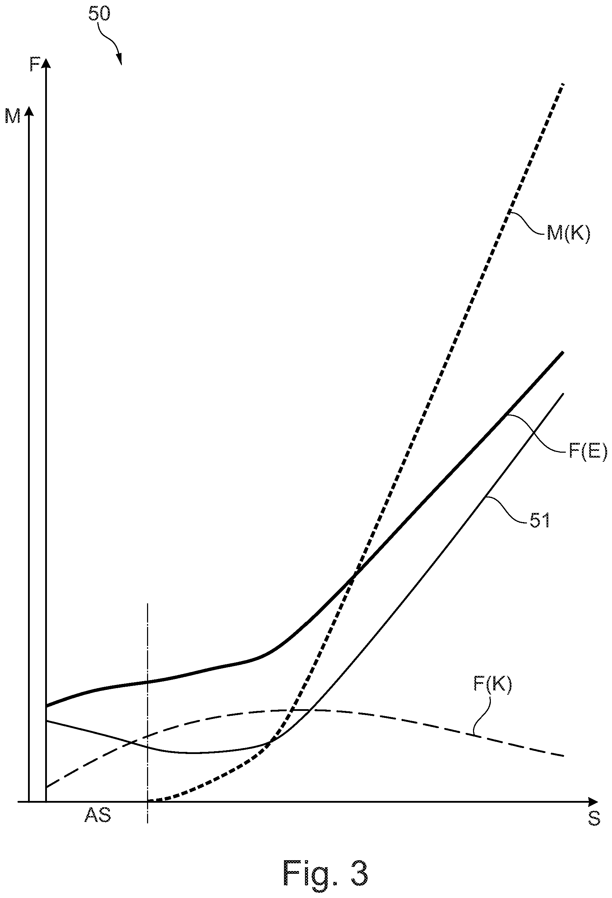

Die Figur 2 zeigt in Abänderung zu der Kupplungseinrichtung 1 der Figur 1 eine bezüglich des Energiespeichers 37a zur Kompensation der degressiven Kennlinie der Hebelfeder 23a die Kupplungseinrichtung 1a mit der Reibungskupplung 6a mit Anpressplatte 12a und Gegendruckplatte 9a in derselben Darstellung. Der Energiespeicher 37a ist hier als Kompensationsfeder 38a ausgebildet, der axial zwischen dem Kupplungsdeckel 10a und der Hebelfeder 23a verspannt ist. Die Kompensationsfeder 38a ist radial innen mittels ihrer Federzungen 43a im Bereich der Hebelspitzen 25a angelegt und stützt sich radial außen radial innerhalb der Rampeneinrichtung 29a an dem Kupplungsdeckel 10a ab. Die Zentrierung der Kompensationsfeder 38a erfolgt in nicht dargestellter Weise an der Hebelfeder 23a oder an dem Kupplungsdeckel 10a. Die Figur 3 zeigt das Diagramm 50 mit dem Moment M und der Kraft F über den Einrückweg s der Reibungskupplung 6, 6a der Figuren 1 und 2. Mit Bezug auf die Figuren 1 und 2 ist über den Einrückweg s ein Lüftwegbereich Δs vorgesehen, bei dem die Reibungskupplung 6, 6a noch kein Kupplungsmoment überträgt. Wird die Hebelfeder 23, 23a weiter entlang des Einrückwegs s verlagert, tritt mit zunehmendem Einrückweg s ein stetig wachsendes, über die Reibungskupplung 6, 6a übertragenes Kupplungsmoment M(K) auf. In dem Lüftwegbereich Δs weist die Kennlinie 51, die die Reibungskupplung ohne die Kompensationsfeder aufweist ein degressives Verhalten auf, um eine unter Figur 1 beschriebene Nachstellfunktion vorzusehen. Um die Einrückkraft F(E) des Aktors 19 über den Einrückweg s trotz der Kraftkennlinie 51 stetig steigend auszubilden, ist der Energiespeicher 37, 37a mit der Kompensationsfederkraft F(K) über den Einrückweg s vorgesehen. In dem Lüftwegbereich Δs weist diese ein über den Einrückweg ansteigendes, beispielsweise progressives oder lineares Kraftverhalten auf, so dass das degressive Verhalten der Hebelfeder 23, 23a ausgeglichen wird. Der Energiespeicher 37, 37a ist als Kompensationsfeder 38, 38a mit Wirkung einer Tellerfeder ausgebildet, so dass die Kompensationsfederkraft F(K) bei größeren Einrückwegen s wieder abnimmt, um die durch die Einrückkraft F(E) bereitgestellte Anpresskraft gegenüber den Reibbelägen möglichst wenig zu beeinflussen und damit hohe Kupplungsmomente über die Reibungskupplung 6, 6a übertragen zu können.

### Bezugszeichenliste

- 1: Kupplungseinrichtung
- 1a: Kupplungseinrichtung
- 2: Kurbelwelle
- 3: Drehschwingungsdämpfer
- 4: Steckverbindung
- 5: Doppelkupplung
- 6: Reibungskupplung
- 6a: Reibungskupplung
- 7: Reibungskupplung
- 8: Antriebsblech
- 9: Gegendruckplatte
- 9a: Gegendruckplatte
- 10: Kupplungsdeckel
- 10a: Kupplungsdeckel
- 11: Anpressplatte
- 12: Anpressplatte
- 12a: Anpressplatte
- 13: Reibbelag
- 14: Reibbelag
- 15: Kupplungsscheibe
- 16: Kupplungsscheibe
- 17: Getriebeeingangswelle
- 18: Getriebeeingangswelle
- 19: Aktor
- 20: Aktor
- 21: Einrücklager
- 22: Einrücklager
- 23: Hebelfeder
- 23a: Hebelfeder
- 24: Hebelfeder
- 25: Hebelspitze
- 25a: Hebelspitze
- 26: Hebelspitze
- 27: Nachstelleinrichtung
- 28: Nachstelleinrichtung
- 29: Rampeneinrichtung
- 29a: Rampeneinrichtung
- 30: Rampeneinrichtung
- 31: Verstellring
- 32: Verstellring
- 33: Sensorfeder
- 34: Sensorfeder
- 35: Zuganker
- 36: Pfeil
- 37: Energiespeicher
- 37a: Energiespeicher
- 38: Kompensationsfeder
- 38a: Kompensationsfeder
- 39: Abstandsbolzen
- 40: Haltescheibe
- 41: Lagerring
- 42: Abstützscheibe
- 43: Federzunge
- 43a: Federzunge
- 50: Diagramm
- 51: Kennlinie
- d: Drehachse
- F: Kraft
- F(E): Einrückkraft
- F(K): Kompensationsfederkraft
- M: Moment
- M(K): Kupplungsmoment
- s: Einrückweg
- Δs: Lüftwegbereich

## Patentansprüche

1. Kupplungseinrichtung (1, 1a) mit einer in nicht betätigtem Zustand geöffneten und von einem Aktor (19) mittels einer Hebelfeder (23, 23a) entlang eines Einrückweges (s) zugedrückten Reibungskupplung (6, 6a), wobei der Aktor (19) mittels eines Einrücklagers (21) radial innen liegende Hebelspitzen (25, 25a) der Hebelfeder (23, 23a) axial verlagert, die Hebelfeder (23, 23a) an einer Rampeneinrichtung (29) einer selbsttätig kraftgesteuerten Nachstelleinrichtung (27) gegenüber einem Kupplungsdeckel (10, 10a) abgestützt ist und radial außen die Anpressplatte (12, 12a) gegenüber einer axial festen Gegendruckplatte (9, 9a) verlagert, wobei eine Sensorfeder (33) mit einer Kraftwirkung zwischen dem Kupplungsdeckel (10, 10a) und der Hebelfeder (23, 23a) eingespannt ist, wobei die Hebelfeder (23, 23a) zumindest vor einer Übertragung eines Kupplungsmoments einen degressiven Kennlinienverlauf aufweist und eine Kontaktkraft der Hebelfeder (23, 23a) bei Verschleiß zwischen Hebelfeder (23, 23a) und der Rampeneinrichtung (29) abhängig von einer sich verschleißabhängig ändernden Einbaulage der Hebelfeder (23, 23a) so weit absinkt, dass sich ein Verstellring (31) der Rampeneinrichtung (29) unter axialem Ausgleich des Verschleißes verdrehen kann, **dadurch gekennzeichnet, dass** zwischen der Hebelfeder (23, 23a) und einem axial festen Bauteil zumindest ein die Einrückkraft (F(E)) des Aktors (19) über den Einrückweg (s) stetig steigend abbildender Energiespeicher (37, 37a) eingespannt ist.

2. Kupplungseinrichtung (1, 1a) nach Anspruch 1, **dadurch gekennzeichnet, dass** der Aktor (19) als kraftgeregelter, eine über den Einrückweg (s) stetig ansteigende Einrückkraft (F(E)) erfordernder Hebelaktor ausgebildet ist.

3. Kupplungseinrichtung nach Anspruch 1 oder 2, **dadurch gekennzeichnet, dass** der zumindest eine Energiespeicher drehfest zwischen einem drehfesten Lagerring des Einrücklagers und einem drehfesten Bauteil axial wirksam verspannt ist.

4. Kupplungseinrichtung (1, 1a) nach Anspruch 1 oder 2, **dadurch gekennzeichnet, dass** der zumindest eine Energiespeicher (37, 37a) im Kraftfluss zwischen einem mit der Reibungskupplung drehenden Lagerring (41) des Einrücklagers (21) und einem axial festen Bauteil der Reibungskupplung (6, 6a) verspannt ist.

5. Kupplungseinrichtung (1, 1a) nach Anspruch 4, **dadurch gekennzeichnet, dass** der zumindest eine Energiespeicher (37, 37a) außerhalb eines zwischen der Hebelfeder (23, 23a) und der Anpressplatte (12, 12a) vorgesehenen Kraftflusses zwischen dem Kupplungsdeckel (10, 10a) und der Hebelfeder (23, 23a) axial verspannt ist.

6. Kupplungseinrichtung (1) nach Anspruch 4 oder 5, **dadurch gekennzeichnet, dass** der zumindest eine Energiespeicher (37) sich an einer mit dem Kupplungsdeckel (10) fest verbundenen Haltescheibe (40) und/oder an dem drehenden Lagerring (41) und/oder den Hebelspitzen (25) abstützt.

7. Kupplungseinrichtung (1) nach einem der Ansprüche 4 bis 6, **dadurch gekennzeichnet, dass** zwischen dem Lagerring (41) und den Hebelspitzen (25) eine Abstützscheibe (42) für den zumindest einen Energiespeicher (37) angeordnet ist.

8. Kupplungseinrichtung (1) nach Anspruch 6 oder 7, **dadurch gekennzeichnet, dass** die Haltescheibe (40) und/oder die Abstützscheibe (42) axial elastisch ausgebildet ist.

9. Kupplungseinrichtung (1a) nach Anspruch 4 oder 5, **dadurch gekennzeichnet, dass** der zumindest eine Energiespeicher (37a) direkt zwischen der Hebelfeder (23a) und dem Kupplungsdeckel (10a) abgestützt ist.

10. Kupplungseinrichtung nach einem der Ansprüche 5 bis 9, **dadurch gekennzeichnet, dass** der zumindest eine Energiespeicher auf demselben Radius wie die Hebelspitzen axial gegen die Hebelfeder abgestützt ist.

## Claims

1. Clutch device (1, 1a) having a friction clutch (6, 6a) which is open in a non-actuated state and is pressed closed along an engagement travel (s) by an actuator (19) by means of a lever spring (23, 23a), the actuator (19) axially moving radially inner lever tips (25, 25a) of the lever spring (23, 23a) by means of an engagement bearing (21), the lever spring (23, 23a) being supported with respect to a clutch cover (10, 10a) on a ramp device (29) of an automatically force-controlled adjusting device (27) and moving the pressure plate (12, 12a) radially on the outside with respect to an axially fixed counterpressure plate (9, 9a), a sensor spring (33) being clamped in with an action of force between the clutch cover (10, 10a) and the lever spring (23, 23a), the lever spring (23, 23a) having a degressive characteristic curve at least before a transmission of a clutch torque, and a contact force of the lever spring (23, 23a) decreasing in the case of wear between the lever spring (23, 23a) and the ramp device (29) in a manner which is dependent on an installation position of the lever spring (23, 23a), which installation position changes in a wear-dependent manner, to such an extent that an adjustment ring (31) of the ramp device (29) can rotate with an axial compensation of the wear, **characterized in that** at least one energy store (37, 37a) which produces the engagement force (F(E)) of the actuator (19) in a continuously increasing manner over the engagement travel (s) is clamped in between the lever spring (23, 23a) and an axially fixed component.

2. Clutch device (1, 1a) according to Claim 1, **characterized in that** the actuator (19) is configured as a force-regulated lever actuator which requires an engagement force (F(E)) which rises continuously over the engagement travel (s).

3. Clutch device according to Claim 1 or 2, **characterized in that** the at least one energy store is braced in an axially effective and torque-proof manner between a torque-proof bearing ring of the engagement bearing and a torque-proof component.

4. Clutch device (1, 1a) according to Claim 1 or 2, **characterized in that** the at least one energy store (37, 37a) is braced in the force flow between bearing ring (41) of the engagement bearing (21), which bearing ring (41) rotates with the friction clutch, and an axially fixed component of the friction clutch (6, 6a).

5. Clutch device (1, 1a) according to Claim 4, **characterized in that** the at least one energy store (37, 37a) is braced axially between the clutch cover (10, 10a) and the lever spring (23, 23a) outside the force flow which is provided between the lever spring (23, 23a) and the pressure plate (12, 12a).

6. Clutch device (1) according to Claim 4 or 5, **characterized in that** the at least one energy store (37) is supported between a retaining disc (40) which is connected fixed to the clutch cover (10) and/or on the rotating bearing ring (41) and/or on the lever tips (25).

7. Clutch device (1) according to one of Claims 4 to 6, **characterized in that** a supporting disc (42) for the at least one energy store (37) is arranged between the bearing ring (41) and the lever tips (25).

8. Clutch device (1) according to Claim 6 or 7, **characterized in that** the retaining disc (40) and/or the supporting disc (42) are/is of axially elastic configuration.

9. Clutch device (1a) according to Claim 4 or 5, **characterized in that** the at least one energy store (37a) is supported directly between the lever spring (23a) and the clutch cover (10a).

10. Clutch device according to one of Claims 5 to 9, **characterized in that** the at least one energy store is supported axially against the lever spring on the same radius as the lever tips.

## Revendications

1. Système d'embrayage (1, 1a) comprenant un embrayage à friction (6, 6a) ouvert à l'état non actionné et repoussé par un actionneur (19) au moyen d'un ressort à levier (23, 23a) le long d'une course d'embrayage (s), l'actionneur (19) déplaçant axialement, au moyen d'une butée d'embrayage (21), des pointes de leviers (25, 25a) radialement internes du ressort à levier (23, 23a), le ressort à levier (23, 23a) étant supporté sur un dispositif à rampes (29) d'un dispositif de rattrapage (27) commandé par force automatiquement par rapport à un couvercle d'embrayage (10, 10a) et déplaçant radialement à l'extérieur le plateau de pression (12, 12a) par rapport à un plateau de réaction (9, 9a) axialement fixe, un ressort de détection (33) étant serré entre le couvercle d'embrayage (10, 10a) et le ressort à levier (23, 23a) sous l'effet d'une force, le ressort à levier (23, 23a) présentant, au moins avant une transmission d'un couple d'embrayage, une allure de courbe caractéristique dégressive, et une force de contact du ressort à levier (23, 23a) diminuant suffisamment, en cas d'usure, entre le ressort à levier (23, 23a) et le dispositif à rampes (29) en fonction d'une position de montage, changeant en fonction de l'usure, du ressort à levier (23, 23a) pour qu'une bague de réglage (31) du dispositif à rampes (29) puisse tourner en compensant axialement l'usure, **caractérisé en ce qu'**au moins un accumulateur d'énergie (37, 37a) reproduisant de manière croissante de façon continue la force d'embrayage (F(E)) de l'actionneur (19) sur la course d'embrayage (s) est serré entre le ressort à levier (23, 23a) et un composant axialement fixe.

2. Système d'embrayage (1, 1a) selon la revendication 1, **caractérisé en ce que** l'actionneur (19) est réalisé sous forme d'actionneur à levier nécessitant une force d'embrayage (F(E)) croissante de façon continue sur la course d'embrayage (s) et réglé en force.

3. Système d'embrayage selon la revendication 1 ou 2, **caractérisé en ce que** ledit au moins un accumulateur d'énergie est serré de manière active axialement entre une bague bloquée en rotation de la butée d'embrayage et un composant bloqué en rotation.

4. Système d'embrayage (1, 1a) selon la revendication 1 ou 2, **caractérisé en ce que** ledit au moins un accumulateur d'énergie (37, 37a) est serré dans le flux de force entre une bague (41), tournant avec l'embrayage à friction, de la butée d'embrayage (21) et un composant axialement fixe de l'embrayage à friction (6, 6a).

5. Système d'embrayage (1, 1a) selon la revendication 4, **caractérisé en ce que** ledit au moins un accumulateur d'énergie (37, 37a) est serré axialement entre le couvercle d'embrayage (10, 10a) et le ressort à levier (23, 23a) à l'extérieur d'un flux de force prévu entre le ressort à levier (23, 23a) et le plateau de pression (12, 12a).

6. Système d'embrayage (1) selon la revendication 4 ou 5, **caractérisé en ce que** ledit au moins un accumulateur d'énergie (37) s'appuie contre un disque de retenue (40) relié solidement au couvercle d'embrayage (10) et/ou contre la bague de butée (41) rotative et/ou contre les pointes de levier (25).

7. Système d'embrayage (1) selon l'une quelconque des revendications 4 à 6, **caractérisé en ce qu'**un disque de support (42) pour ledit au moins un accumulateur d'énergie (37) est disposé entre la bague de butée (41) et les pointes de levier (25).

8. Système d'embrayage (1) selon la revendication 6 ou 7, **caractérisé en ce que** le disque de retenue (40) et/ou le disque de support (42) sont réalisés de manière axialement élastique.

9. Système d'embrayage (1a) selon la revendication 4 ou 5, **caractérisé en ce que** ledit au moins un accumulateur d'énergie (37a) est supporté directement entre le ressort à levier (23a) et le couvercle d'embrayage (10a).

10. Système d'embrayage selon l'une quelconque des revendications 5 à 9, **caractérisé en ce que** ledit au moins un accumulateur d'énergie est supporté axialement sur le ressort à levier sur le même rayon que les pointes de levier.
